# EUROPÄISCHE PATENTSCHRIFT

(11) **EP 2 475 544 B1**
(45) Veröffentlichungstag und Bekanntmachung des Hinweises auf die Patenterteilung: **23.10.2013**
(21) Anmeldenummer: 10745575.0
(22) Anmeldetag: 20.08.2010
(51) Int. Cl.: B60N 2/225, B60N 2/235

(54) **BESCHLAG FÜR EINEN FAHRZEUGSITZ**
FITTING FOR A VEHICLE SEAT
FERRURE POUR SIÈGE DE VÉHICULE

(30) Priorität: 10.09.2009 DE 102009041491
(43) Veröffentlichungstag der Anmeldung: 18.07.2012
(73) Patentinhaber: KEIPER GmbH & Co. KG, 67657 Kaiserslautern (DE)
(72) Erfinder: ASSMANN, Uwe, 42857 Remscheid (DE); HILLE, Gunther, 42897 Remscheid (DE)
(74) Vertreter: Liedhegener, Ralf
(86) Internationale Anmeldenummer: PCT/EP2010/005104
(87) Internationale Veröffentlichungsnummer: WO 2011/029521

(56) Entgegenhaltungen:
- WO-A1-01/83259
- WO-A1-2009/060641
- DE-A1-102008 033 665

## Beschreibung

Die Erfindung betrifft einen Beschlag für einen Fahrzeugsitz mit den Merkmalen des Oberbegriffs des Anspruches 1.

Ein Beschlag dieser Art ist aus der DE 198 13 517 B4 bekannt. Das Beschlagteil weist mehrere zapfenförmige Absätze nebeneinander auf, die teils zur Vorpositionierung und teils zur Befestigung an der Struktur dienen. Die Herstellung und Montage ist aufwendig, und die Abstände der Befestigungspunkte zueinander sind relativ gering.

Die WO 01/83259 A1 offenbart ein Beschlagteil mit polygonalen, sechskantigen Absatzkonturen zum Zusammenwirken mit einer Sitzstruktur. Diese Absätze sind im Bereich der "Schlüsselweite" des Seckskantprofils umlaufend axial beabstandet zu den benachbarten, lasttragenden, inneren Bauteilen des Beschlags, beispielsweise zu einem Zahnring. Dies führt zu einer geringen Abstützung der inneren Bauteile und kann dadurch zu einem Festigkeitsverlust des Beschlages führen.

Aus der DE 10 2008 033 665 A1 ist ein Beschlagteil mit einem Hohlraum zur Aufnahme von Federn bekannt, der eine längliche, zweiarmige Kontur aufweist.

Ein Beschlagteil mit kreuzförmiger Geometrie zur Riegelführung offenbart die WO 2009/060641 A1. Ein formschlüssiges Zusammenwirken des Beschlages mit der Sitzstruktur erfolgt mittels mehrerer Befestigungszapfen des Beschlagteils, die in ein Lochbild der Sitzstruktur eingesteckt und verschweißt sind.

Der Erfindung liegt die Aufgabe zugrunde, einen Beschlag der eingangs genannten Art zu verbessern, insbesondere so zu gestalten, dass nur ein Teil des Materials des Beschlagteils zur Befestigung an die Sitzstruktur als Absatz ausgestellt werden muss und dennoch die Abstände zwischen den einzelnen Befestigungspunkten des Beschlages an die Sitzstruktur möglichst groß sind. Diese Aufgabe wird erfindungsgemäß durch einen Beschlag mit den Merkmalen des Anspruches 1 gelöst. Vorteilhafte Ausgestaltungen sind Gegenstand der Unteransprüche.

Indem als Absatz, der als axial vorspringende Kontur zum formschlüssigen Zusammenwirken mit der Struktur eines Sitzteils oder einer Lehne vorgesehen ist, ein Sternabsatz vorgesehen ist, welcher eine vierarmige, kreuzförmige und im wesentlichen symmetrische Sternform aufweist, wird eine definierte Schnittstelle zwischen dem Beschlag und der Struktur des Sitzteils oder der Lehne geschaffen. Die Schnittstelle ist für verschiedene Fügeverfahren universell einsetzbar, beispielsweise für Laserschweißen mit langen, gegebenenfalls unterbrochenen Schweißnähten und für MAG-Schweißen mit einzelnen kurzen Schweißnähten. Bei der Ausbildung des Sternabsatzes muss - gegenüber einem einzigen Ringabsatz - nur ein Teil des Materials des Beschlagteils ausgestellt werden. Trotzdem entstehen durch die Form des Sternabsatzes relativ große Abstände der Befestigungspunkte. Gegenüber mehreren einzelnen zapfenartigen Absätzen verringert sich bei einem einzigen Sternabsatz auf dieser Stirnseite des Beschlags der Aufwand beim Schweißen, weil der Schweißvorgang nicht mehrfach unterbrochen werden muss

Mit dem Sternabsatz kann bedarfsweise eine bestimmte Ausrichtung des Beschlagteils erzwungen werden. Hierfür kann die exakte Symmetrie der Sternform (Rotationssymmetrie, Spiegelsymmetrie) auch durch eine Abweichung gebrochen werden, die in ihren Abmessungen gering gegenüber der Sternform ist und die als (zusätzliche) Positionierhilfe oder Verdrehsicherung dient.Besonders vorteilhaft ist der Sternabsatz bei Rastbeschläge mit ebenfalls vierzähliger Symmetrie.

Indem der Umklammerungsring einen Zentrierabschnitt aufweist, welcher sich gegenüber dem äußeren Ringabschnitt axial erstreckt und welcher das erste Beschlagteil radial außen übergreift und dessen Außenfläche teilweise überdeckt, wird eine Zentrierhilfe geschaffen, welche die exakte Positionierung des Umklammerungsrings auf dem ersten Beschlagteil ermöglicht, so dass anschließend eine fehlerfreie Befestigung des Umklammerungsrings am ersten Beschlagteil erfolgen kann. Dies vermeidet das beim bekannten Beschlag bestehende Problem, dass der Umklammerungsring fehlerhaft positioniert und anschließend in dieser fehlerhaften Position verschweißt wird, oder dass zusätzliche Hilfsvorrichtungen, beispielsweise präzise gearbeitete Anschlagsbacken, notwendig werden, um den Ausschuss zu minimieren. Insbesondere ein geschlossen umlaufender Zentrierabschnitt schützt den Umklammerungsring vor Beschädigungen zwischen seiner Herstellung und seinem Verbau. Der am ersten Beschlagteil befestigte Umklammerungsring erhöht zudem die Festigkeit des Beschlags und somit dessen Sicherheit. Es ist aber auch möglich, dass der Umklammerungsring in an sich bekannter Weise umgebördelt ist, d.h. das erste Beschlagteil auf der Außenfläche - sowohl im zylinderischen Bereich als auch auf der vom zweiten Beschlagteil abgewandten Stirnseite - überdeckt, oder dass der Umklammerungsring auf den zylindrischen Bereich der Außenfläche des ersten Beschlagteils gepresst und mit letzterem verschweißt ist.

Die erfindungsgemäße Lösung ist zunächst unabhängig vom inneren Aufbau des Beschlags, d.h. ob er als Getriebebeschlag oder als Rastbeschlag ausgebildet ist. Dadurch ist ein Baukastensystem möglich, bei dem die gleiche Technik des Umklammerungsrings oder die gleiche definierte Schnittstelle zur Struktur vorhanden ist, also der gleiche Baurarumbedarf im Allgemeinen und die gleichen Abmessungen im Speziellen, jedoch der innere Aufbau hinsichtlich der speziellen Anwendung konkretisiert werden kann, beispielsweise nach den Kundenwünschen.

Die Technik des erfindungsgemäß weitergebildeten Umklammerungsrings führt zu Einsparungen an Gewicht und Kosten, wenn im Falle des Getriebebeschlags das Zahnrad und im Falle des Rastbeschlags die Führungssegmente am radial äußeren Rand des zugeordneten zweiten Beschlagteils ausgebildet sind. Der Umklammerungsring kann das Zahnrad oder die Führungssegmente übergreifen und abdecken und dadurch schützen.

Die Verwendung eines Exzenterumlaufgetriebes erlaubt eine stufenlose Neigungseinstellung der Lehne. Die Einsparung eines zentralen Ritzels gegenüber einem Planetenumlaufgetriebe führt zur Entstehung einer Taumelbewegung, die der relativen Drehung der Beschlagteile überlagert ist. Das Exzenterumlaufgetriebe kann manuell oder motorisch angetrieben werden. Der Exzenter kann ein einstückig ausgebildeter Festexzenter oder ein mehrteiliger, aus gegeneinander vorgespannten Keilsegmenten bestehender Exzenter sein, der den Beschlag spielfrei feststellt.

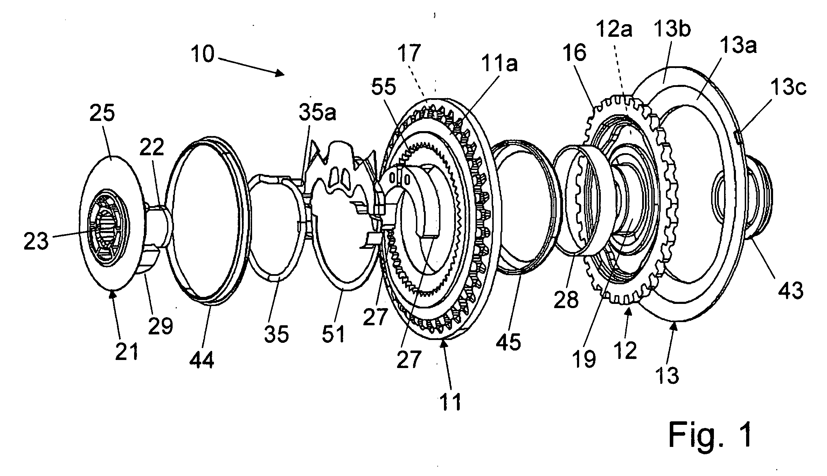

Im folgenden ist die Erfindung anhand zweier in der Zeichnung dargestellter Ausführungsbeispiele mit Abwandlungen näher erläutert. Es zeigen
- Fig. 1: eine Explosionsdarstellung des ersten Ausführungsbeispiels,

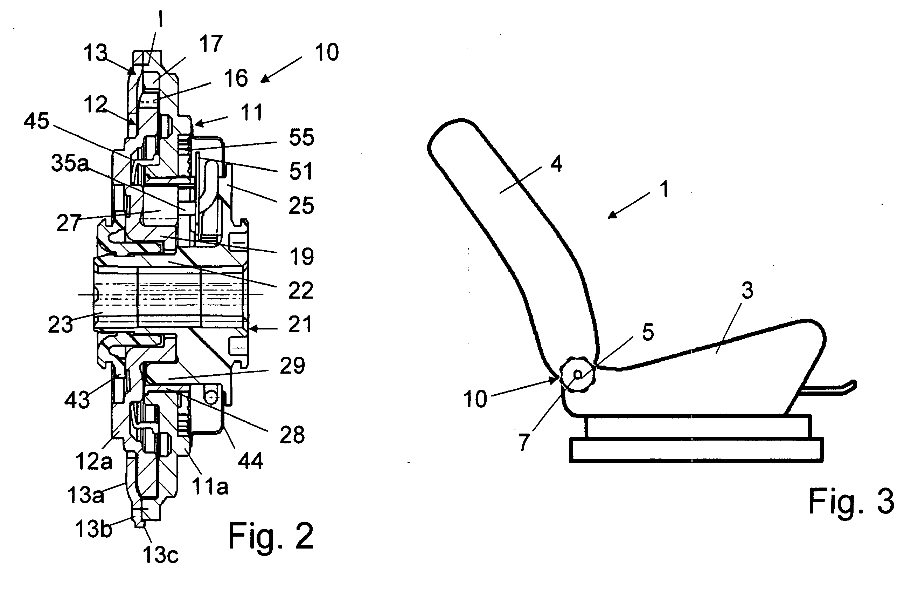

- Fig. 2: einen axialen Schnitt durch das erste Ausführungsbeispiel,
- Fig. 3: eine schematische Darstellung eines Fahrzeugsitzes,

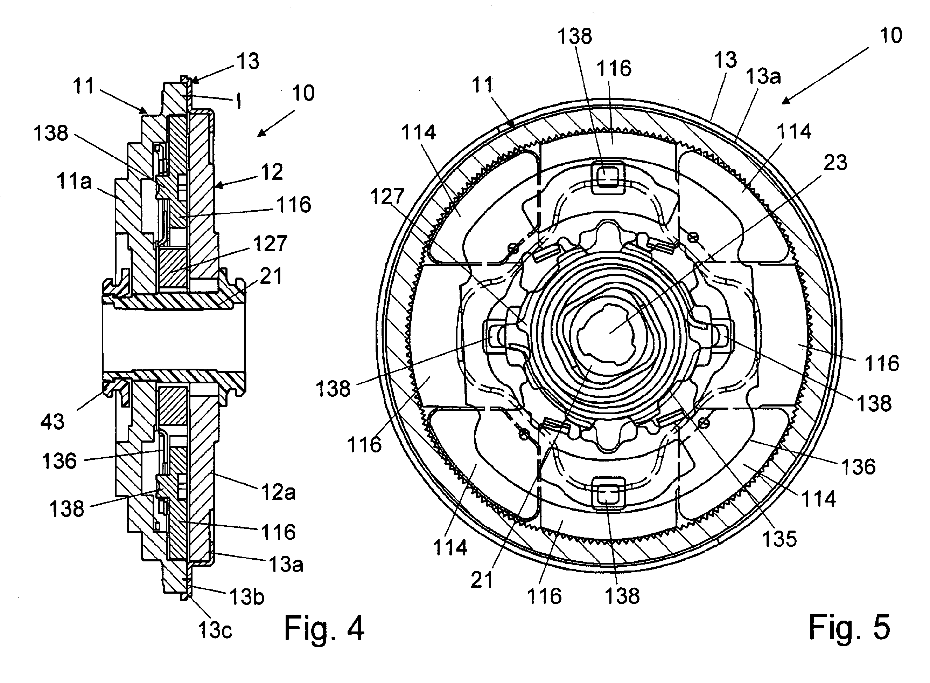

- Fig. 4: einen axialen Schnitt durch das zweite Ausführungsbeispiel,
- Fig. 5: einen radialen Schnitt durch das zweite Ausführungsbeispiel,

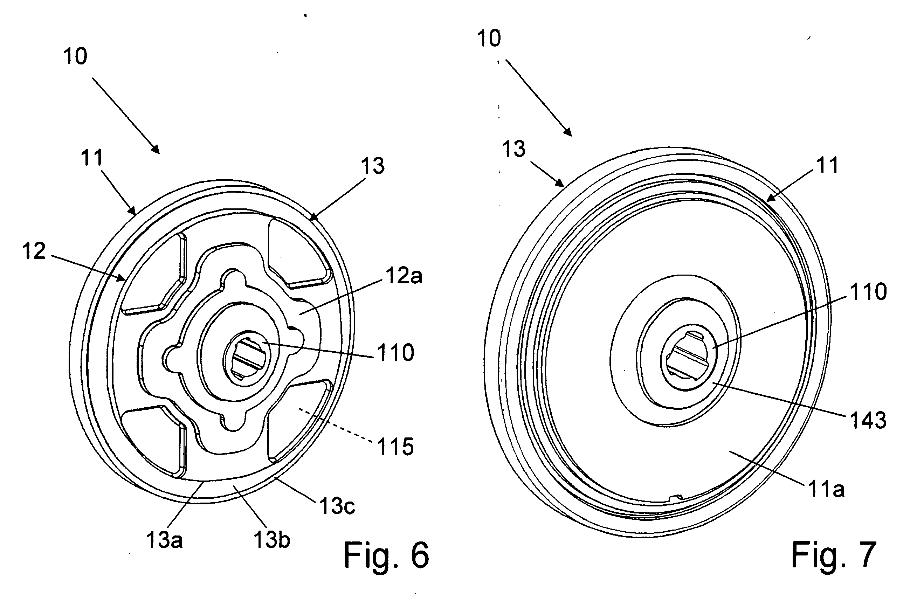

- Fig. 6: eine perspektivische Ansicht der dem Sitzteil zugewandten Stirnseite des zweiten Ausführungsbeispiels,
- Fig. 7: eine perspektivische Ansicht der der Lehne zugewandten Stirnseite des zweiten Ausführungsbeispiels,

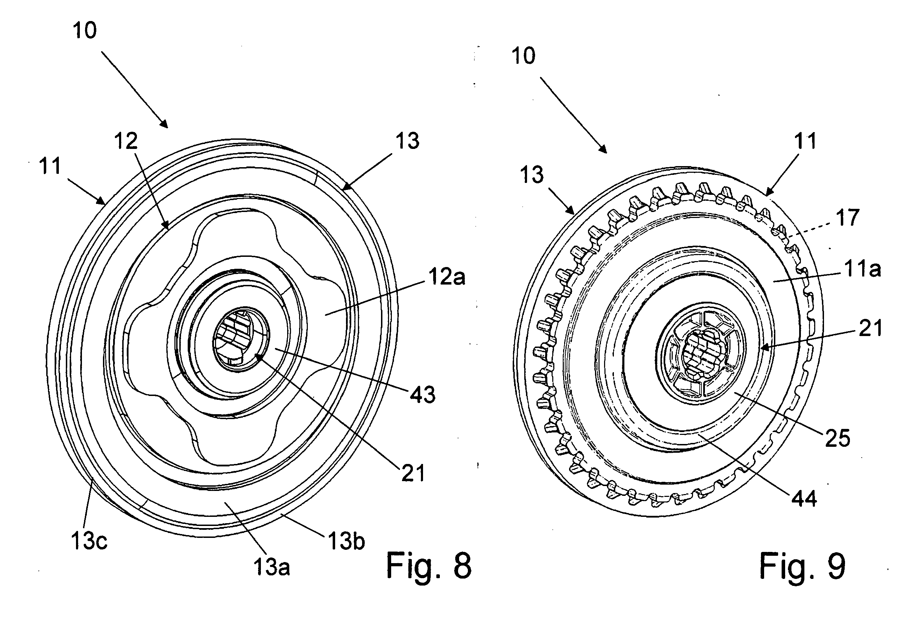

- Fig. 8: eine perspektivische Ansicht der dem Sitzteil zugewandten Stirnseite des ersten Ausführungsbeispiels,
- Fig. 9: eine perspektivische Ansicht der der Lehne zugewandten Stirnseite des ersten Ausführungsbeispiels,
- Fig. 10: eine Ansicht eines sitzteilfesten Adapters,
- Fig. 11: eine perspektivische Teilansicht eines Lehnenseitenholms,
- Fig. 12: einen Schnitt durch eine I-Naht an einem Stumpfstoß, und
- Fig. 13: einen Schnitt durch eine I-Naht an einem Überlappstoß.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handrades 5, oder motorisch, beispielsweise mittels eines Elektromotors, eine Antriebswelle 7 gedreht, welche horizontal im Übergangsbereich zwischen Sitzteil 3 und Lehne 4 angeordnet ist. Auf beiden Seiten des Fahrzeugsitzes 1 greift die Antriebswelle 7 drehfest in einen Beschlag 10 ein. Die Antriebswelle 7 definiert die verwendeten Richtungsangaben eines Zylinderkoordinatensystems.

Der Beschlag 10 weist ein erstes Beschlagteil 11 und ein zweites Beschlagteil 12 auf, welche relativ zueinander verdrehbar sind. Die beiden Beschlagteile 11 und 12 lassen jeweils näherungsweise in eine kreisrunde Scheibenform einbeschreiben. Beide Beschlagteile 11 und 12 bestehen vorzugsweise aus Metall, insbesondere Stahl, der wenigstens bereichsweise gehärtet sein kann. Zur Aufnahme der axial wirkenden Kräfte, also zum axialen Zusammenhalt der Beschlagteile 11 und 12, ist ein Umklammerungsring 13 vorgesehen. Der Umklammerungsring 13 besteht vorzugsweise aus Metall, insbesondere Stahl, der vorzugsweise ungehärtet ist. Der Umklammerungsring 13 weist eine im wesentlichen flache Ringform auf, vorliegend mit einem (radial) inneren Ringabschnitt 13a, einem (radial) äußeren Ringabschnitt 13b, wenigstens einem Zentrierabschnitt 13c und gegebenenfalls Verbindungsabschnitten dazwischen.

Der Umklammerungsring 13 ist fest mit einem der beiden Beschlagteile 11 und 12 verbunden, vorliegend im äußeren Ringabschnitt 13b mit dem ersten Beschlagteil 11. Mittels des inneren Ringabschnittes 13a, welcher in einer zu axialen Richtung senkrechten Ebene angeordnet ist, übergreift der Umklammerungsring 13, gegebenenfalls unter Zwischenlage eines Gleitrings, das zweite Beschlagteil 12 radial außen (d.h. in dessen radial äußerem Randbereich), ohne die Relativbewegung der beiden Beschlagteile 11 und 12 zu behindern. Zudem werden die einander zugewandten Innenflächen der beiden Beschlagteile 11 und 12 vor dem Eindringen von Fremdkörpern und der Verschmutzung und Beschädigung geschützt.

Der äußere Ringabschnitt 13b kann in einer zum inneren Ringabschnitt 13a axial geringfügig (beispielsweise um die Materialstärke des Gleitrings) zum ersten Beschlagteil 11 hin versetzten Ebene angeordnet oder im Profil in einem bestimmten Winkel zum inneren Ringabschnitt 13a abgeknickt sein. Es ist aber auch möglich, dass der äußere Ringabschnitt 13b und der innere Ringabschnitt 13a flach (d.h. ohne Stufe und/oder Knick und damit unmerklich) ineinander übergehen, also lediglich durch ihre jeweilige Nachbarschaft zu den unterschiedlichen Beschlagteilen 11 und 12 definiert sind. Mittels des äußeren Ringabschnitts 13b liegt der Umklammerungsring 13 - vorzugsweise flächig - am ersten Beschlagteil 11 an dessen Innenfläche an, genauer gesagt an dessen innerer Stirnseite in einem radial äußeren Randabschnitt, und ist dort am ersten Beschlagteil 11 befestigt.

Der Umklammerungsring 13 und das mit ihm fest verbundene Beschlagteil 11 oder 12 umklammern also das relativ zu ihnen bewegliche, andere der beiden Beschlagteile 11 und 12. In baulicher Hinsicht bilden die beiden Beschlagteile 11 und 12 daher zusammen (mit dem Umklammerungsring 13) eine scheibenförmige Einheit.

Der Zentrierabschnitt 13c erstreckt sich gegenüber dem äußeren Ringabschnitt 13b in axialer Richtung vorzugsweise um maximal eine Materialstärke des Umklammerungsrings 13. Der Zentrierabschnitt 13c übergreift das erste Beschlagteil 11 radial außen, d.h. der Zentrierabschnitt 13c überdeckt das erste Beschlagteil 11 teilweise auf dessen Außenfläche, genauer gesagt im zylindrischen Bereich seiner Außenfläche. Der Zentrierabschnitt 13c kann angeprägt sein (d.h. das Material am Rand des äußeren Ringabschnittes 13b wird in axialer Richtung vorgeschoben, beispielsweise um eine halbe Materialstärke des Umklammerungsrings 13). Der Zentrierabschnitt 13c kann auch durch eine Randumstellung ausgebildet werden (d.h. das Material am Rand des äußeren Ringabschnittes 13a wird um 90° umgebogen). In Umfangsrichtung kann der Zentrierabschnitt 13c vollständig geschlossen umlaufen oder unterbrochen sein, beispielsweise lediglich in zwei breiteren Bogenstücken oder drei schmaleren Bogenstücken ausgebildet sein. In allen Fällen dient der Zentrierabschnitt 13c dazu, den Umklammerungsring 13 vor der Befestigung am ersten Beschlagteil 11 exakt zu positionieren, nämlich konzentrisch zum ersten Beschlagteil 11. Zusätzlich erhöht der Zentrierabschnitt 13c die Festigkeit des fertig zusammengebauten Beschlags 10. In der in Umfangsrichtung vollständig umlaufenden Variante schützt der Zentrierabschnitt 13c vor der Positionierung am ersten Beschlagteil 11 die Ringform des Umklammerungsrings 13 vor Verformungen durch axial wirkende Kräfte, beispielsweise beim Transport nach dem Ausstanzen.

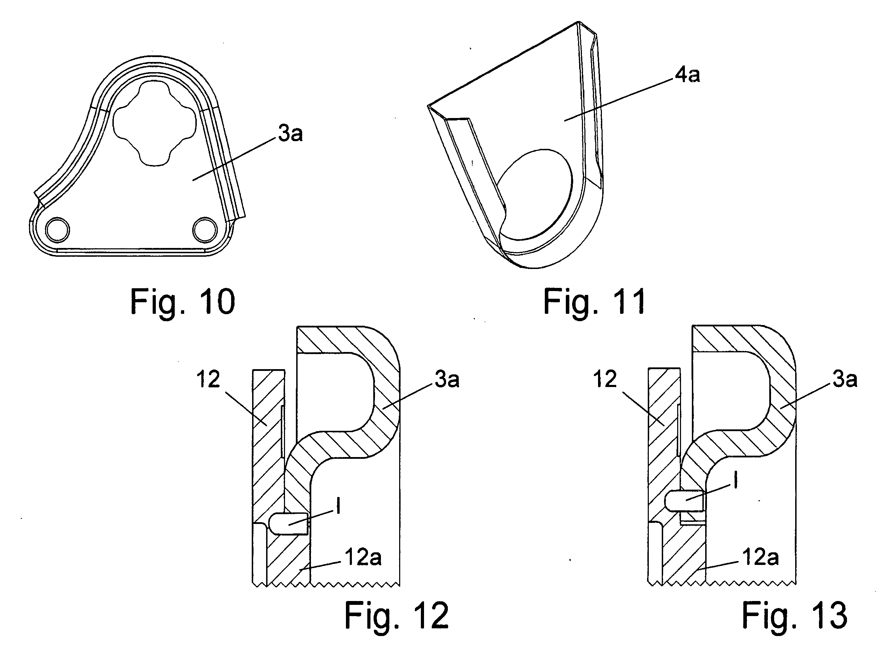

Die Befestigung des Umklammerungsrings 13 am ersten Beschlagteil 11 kann mittels Laserschweißens oder mittels einer anderen an sich bekannten Befestigungstechnik erfolgen. Im Falle des Laserschweißens kann beispielsweise eine I-Naht I an einem Stumpfstoß (analog Fig. 12), beispielsweise zwischen dem äußeren Ringabschnitt 13b und dem ersten Beschlagteil 11, oder eine I-Naht I an einem Überlappstoß (analog Fig. 13) erzeugt werden ("Durchstich"), und zwar aus axialer oder aus radialer Richtung. Die I-Naht I kann über den Umfang verteilt mit mehreren einzelnen, unterbrochenen Schweißnahtabschnitten oder mit einer einzigen, umlaufenden Schweißnaht ausgebildet sein.

Mit der Montage des Beschlags 10 ist das erste Beschlagteil 11 beispielsweise fest mit der Struktur der Lehne 4 verbunden, also lehnenfest. Das zweite Beschlagteil 12 ist dann fest mit der Struktur des Sitzteils 3 verbunden, also sitzteilfest. Diese Zuordnungen der Beschlagteile 11 und 12 sind bevorzugt, wenn die radialen Abstände der Befestigungspunkte zwischen dem Beschlag 10 und einem relativ dünnen Lehnenblech als Lehnenseitenholm möglichst groß sein sollen. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt im Kraftfluss zwischen Lehne 4 und Sitzteil 3.

Für eine definierte Schnittstelle des Beschlags 10 zu den Strukturen von Sitzteil 3 und Lehne 4, sind an den beiden Beschlagteilen 11 und 12 axial vorspringende Konturen vorgesehen, welche formschlüssig mit entsprechenden Öffnungen in Strukturteilen von Sitzteil 3 und Lehne 4, beispielsweise in kundenspezifischen Adaptern (vorliegend einem sitzteilfesten Adapter 3a) oder direkt im Sitzrahmen-Seitenteil oder Lehnenseitenholm 4a, zusammenwirken. Der so vorpositionierte Beschlag 10 kann dann an dem jeweiligen Strukturteil befestigt werden, beispielsweise durch Laserschweißen oder MAG-Schweißen. Beim Laserschweißen kann zwischen dem Beschlag 10 und den Strukturteilen 3a oder 4a eine I-Naht I als umlaufende (oder stellenweise unterbrochene) Schweißnaht vorgesehen sein. Die I-Naht I kann im Stumpfstoß (Fig. 12) zwischen der axial vorspringenden Kontur und dem Rand der die Kontur aufnehmenden Öffnung oder im Überlappstoß (Fig. 13) vorgesehen sein. Beim MAG-Schweißen ist die Schweißnaht vorzugsweise nur an einzelnen, ausgezeichneten Stellen entlang des Stumpfstoßes vorgesehen. Gegebenenfalls ist der Stumpfstoß teilweise mit einem Freiraum aufgeweitet, indem der Rand der Öffnung mit einer Stufe oder Fase versehen ist, so dass die Schweißnaht besser dazwischen eindringen kann und auch in radialer Richtung besser verbindend wirkt.

Vorliegend ist am ersten Beschlagteil 11 - auf seiner vom zweiten Beschlagteil 12 abgewandten Stirnseite - ein kreisförmiger Ringabsatz 11a ausgebildet, beispielsweise durch eine Materialausstellung beim Prägen des ersten Beschlagteiles 11. Der Ringabsatz 11 a greift formschlüssig durch eine kreisförmige Öffnung im Lehnenseitenholm 4a, so dass der Lehnenseitenholm 4a in dem radial außerhalb des Ringabsatzes 11a angeordneten Teil der Stirnseite des ersten Beschlagteils 11 in Anlage an das erste Beschlagteil 11 kommt. Entlang der Außenkante des Ringabsatzes 11a ist dann eine Schweißnaht angebracht. Im Falle des Laserschweißens kann die Schweißnaht um den kreisringförmigen Verlauf der Außenkante des Ringabsatzes 11a pendeln.

Am zweiten Beschlagteil 12 ist vorliegend- auf seiner vom ersten Beschlagteil 11 abgewandten Stirnseite - ein Sternabsatz 12a ausgebildet. Der Sternabsatz 12a weist eine vierarmige, Kreuzformige, im wesentlichen symmetrische Sternform auf. Die im wesentlichen symmetrische Sternform kann exakt symmetrisch sein oder hierzu eine Abweichung aufweisen, deren Abmessung gering im Vergleich zu den (radialen) Abmessungen des Sternabsatzes 12a ist, und mittels deren (zusätzlich zur Sternform) eine Positionierhilfe oder Verdrehsicherung geschaffen wird, die den Formschluss mit den Strukturteilen 3a und 4a in genau eine möglich Ausrichtung zwingt

Beim vorliegenden Sternabsatz 12a schließt jeder Arm mit konvexen Bogen (und einem geraden Stück) ab, und die Arme gehen vorliegend jeweils tangential mit konkavem Bogen (und einem geraden Stück) ineinander über. Bevorzugt sind Kreisbögen, also mit konstanter Krümmung, jedoch sind auch andere, insbesondere trigonometrische, Bögen denkbar. In der Mitte des Sternabsatzes 12a ist vorliegend aus Bauraumgründen eine weitere Ausstellung vorgesehen. Der Sternabsatz 12a greift formschlüssig durch eine genau passende Öffnung im sitzteilfesten Adapter 3a (oder im Sitzrahmen), so dass der sitzteilfeste Adapter 3a (oder der Sitzrahmen) in dem radial außerhalb des Sternabsatzes 12a angeordneten Teil der Stirnseite des zweiten Beschlagteils 12 in Anlage an das zweite Beschlagteil 12 kommt. Entlang der Außenkante des Sternabsatzes 12a ist dann eine Schweißnaht angebracht. Im Falle des Laserschweißens kann diese Schweißnaht um die Außenkante des Sternabsatzes 12a pendeln. Im Falle des MAG-Schweißens ist beispielsweise am Abschluß jeden Armes eine kurze Schweißnaht vorgesehen.

Der Sternabsatz 12a hat den Vorteil, dass bei seiner Ausbildung nur ein Teil des Materials des zweiten Beschlagteils 12 ausgestellt (herausgedrückt) werden muss, und trotzdem relativ große Abstände der Befestigungspunkte entstehen. Zudem kann bedarfsweise (durch die Sternform und gegebenfalls durch Abweichung von der exakten Symmetrie) eine bestimmte Ausrichtung des zweiten Beschlagteils 12 erzwungen werden. In einer abgewandelten Ausführung ist auch am ersten Beschlagteil 11 ein Sternabsatz anstelle des Ringabsatzes 11 a vorgesehen.

Die bislang beschriebenen, äußerlichen Merkmale des Beschlags 10 sind weitgehend unabhängig von dessen innerem Aufbau, so dass sie für beide Ausführungsbeispiele, abgesehen von Detailabmessungen, gleich sind. Die beiden Ausführungsbeispiele unterscheiden sich daher im wesentlichen nur durch Merkmale ihres inneren Aufbaus.

Im ersten Ausführungsbeispiel ist der Beschlag 10 als Getriebebeschlag ausgebildet, bei welchem das erste Beschlagteil 11 und das zweite Beschlagteil 12 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 44 36 101 A1 beschrieben ist, deren diesbezüglicher Offenbarungsgehalt ausdrücklich einbezogen wird.

Zur Ausbildung des Getriebes ist am zweiten Beschlagteil 12 ein außenverzahntes Zahnrad 16 und am ersten Beschlagteil 11 ein innenverzahnter Zahnkranz 17 ausgebildet, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Ein entsprechender Unterschied der Zähneanzahl von Zahnrad 16 und Zahnkranz 17 von wenigstens einem Zahn ermöglicht eine Abwälzbewegung des Zahnkranzes 17 am Zahnrad 16. Die Ausbildung von Zahnrad 16 und Zahnkranz 17 erfolgt vorzugsweise mittels eines einzigen Präge-Stanz-Vorgangs, der zugleich die Beschlagteile 11 und 12 aus ihrem Ausgangsmaterial ausstanzt.

Eines der beiden Beschlagteile 11 und 12, vorliegend das zweite Beschlagteil 12, weist auf der dem Zahnkranz 17 zugewandten Seite konzentrisch zum Zahnrad 16 einen Kragen 19 auf, der als Kragenzug am letztgenannten Beschlagteil angeformt (d.h. einstückig ausgebildet) oder als separate Hülse daran befestigt sein kann. Im Kragen 19 ist ein Mitnehmer 21 mittels einer Nabe 22 drehbar gelagert. Der Mitnehmer 21 besteht vorzugsweise aus Kunststoff. Die Nabe 22 des Mitnehmers 21 ist zentral mit einer Bohrung 23 zur Aufnahme der Antriebswelle 7 versehen. Das Profil der Bohrung 23 ist passend zum Profil der Antriebswelle 7, vorliegend einem Keilwellenprofil, ausgebildet. Im Anschluss an seine Nabe 22 weist der Mitnehmer 21 eine einstückig mit der Nabe 22 ausgebildete Abdeckscheibe 25 mit größerem Durchmesser als die Nabe 22 auf.

Auf dem Kragen 19 sind zwei Keilsegmente 27 - mit ihren gekrümmten Innenflächen - abgestützt, die - mit ihren gekrümmten Außenflächen - das andere der beiden Beschlagteile 11 und 12, vorliegend das erste Beschlagteil 11, lagern. Hierfür ist eine Aufnahme des letztgenannten Beschlagteils mit einer vorzugsweise drehfest eingepressten Gleitlagerbuchse 28 ausgekleidet, an der die Außenflächen der Keilsegmente 27 anliegen. Die Begriffe "abstützen" und "lagern" sollen nicht auf eine bestimmte Richtung des Kraftflusses durch den Beschlag 10 beschränkt sein, da diese Richtung von der Montage des Beschlags 10 abhängt.

Der Mitnehmer 21 weist - radial beabstandet zur Nabe 22 - ein mit Spiel zwischen die Schmalseiten der Keilsegmente 27 fassendes Mitnehmersegment 29 auf, welches mit der Abdeckscheibe 25 und mit der Nabe 22 einstückig ausgebildet ist. Die Keilsegmente 27, deren Breitseiten einander zugekehrt sind, nehmen, beispielsweise mit je einer Öffnung oder einer durch vorspringende Materialpartien definierten Ausnehmung, jeweils einen abgewinkelten Endfinger 35a einer Omega-förmigen Feder 35 auf. Die Feder 35 beaufschlagt die Keilsegmente 27 in Umfangsrichtung, insbesondere um sie auseinander zu drücken, wobei im Betrieb die Breitseiten der Keilsegmente 27 einander berühren und beaufschlagen können.

Der Mitnehmer 21 wird auf der Außenseite des den Kragen 19 aufweisenden Beschlagteils durch einen vorzugsweise aufgeclipsten Sicherungsring 43 axial gesichert. Der Sicherungsrings 43 erstreckt sich in axialer Richtung entlang eines Teiles der Nabe 22, so dass die Nabe 22 nicht direkt an der Innenseite des Kragens 19 anliegt, sondern unter Zwischenlage des Sicherungsrings 43 im Kragen 19 gelagert ist (und dadurch der Mitnehmer 21 am zweiten Beschlagteil 12 gelagert ist). Auf der Außenseite des die Gleitlagerbuchse 28 aufweisenden Beschlagteils (vorliegend des ersten Beschlagteils 11) ist zwischen dessen radial äußerem Rand und der Abdeckscheibe 25 ein Dichtring 44 vorgesehen, beispielsweise aus Gummi oder weichem Kunststoff, der mit der Abdeckscheibe 25 verbunden ist, insbesondere verclipst ist. Der Dichtring 44 kann auch aus Metall ausgebildet und mit dem ersten Beschlagteil 11 fest verbunden, beispielsweise verschweißt, sein, wobei dann die Abdeckscheibe 25 relativ zum Dichtring 44 beweglich ist. Innerhalb des Bauraums zwischen den beiden Beschlagteilen 11 und 12 ist optional ein Trennring 45 als interne Dichtung vorgesehen, welcher beispielsweise aus Kunststoff besteht.

Durch die Keilsegmente 27 (und die Feder 35) wird ein Exzenter definiert, welcher in Verlängerung der Richtung der Exzentrizität das Zahnrad 16 an einer Eingriffsstelle in den Zahnkranz 17 drückt. Bei einem Antrieb durch die sich (mehrfach) drehende Antriebswelle 7 wird ein Drehmoment zunächst auf den Mitnehmer 21 und mittels des Mitnehmersegments 29 dann auf den so definierten Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt, d.h. als Relativdrehung mit überlagerter Taumelbewegung. Die Neigung der Lehne 4 ist dadurch zwischen mehreren Gebrauchsstellungen stufenlos einstellbar.

Zur Verbesserung des dynamischen Betriebsverhaltens ist vorzugsweise noch als Sperrelement eine Sperrfeder 51 vorgesehen, wie sie beispielsweise in der DE 195 48 809 C1 offenbart ist, deren diesbezüglicher Offenbarungsgehalt ausdrücklich einbezogen wird. Die Sperrfeder 51 wirkt vorliegend mit einer Verzahnung 55 zusammen, die als weiterer Zahnkranz am ersten Beschlagteil 11 ausgebildet ist. Die - vorzugsweise auf einem axialen Überstand der Gleitlagerbuchse 28 beweglich gelagerte - Sperrfeder 51 sperrt jeweils die Keilsegmente 27 im nicht-angetriebenen Zustand (indem die Sperrfeder 51 mittels Anlage an die Endfinger 35a die Feder 35 sperrt) und wird durch den angetriebenen Mitnehmer 21 gelöst.

Aufgrund der vorliegenden Montage des Beschlags 10 wird der Exzenter (d.h. vorrangig die Keilsegmente 27) vom zweiten Beschlagteil 12 gelagert, während er seinerseits das erste Beschlagteil 11 lagert. Die Verhältnisse könnten aber genau umgekehrt sein, d.h. das erste Beschlagteil 11 lagert den Exzenter, welcher seinerseits das zweite Beschlagteil 12 lagert. Zudem kann der Kragen 19 am ersten Beschlagteil 11, also konzentrisch zum Zahnkranz 17, und die Gleitlagerbuchse 28 am zweiten Beschlagteil 12, also konzentrisch zum Zahnrad 16 vorgesehen sein. Die Reihenfolge in der Anordnung vom Mitnehmer 21 bis zum Sicherungsring 43 kehrt sich entsprechend um. Die letztgenannte Anordnung hat den Vorteil, dass der Zahneingriff zwischen Zahnrad 16 und Zahnkranz 17 einerseits und die Lagerung des Exzenters andererseits in der gleichen Ebene stattfinden. Die im ersten Ausführungsbeispiel beschriebene Anordnung hat den Vorteil, dass am "kleineren" zweiten Beschlagteil 12 mehr Fläche zur Befestigung an der Struktur des Sitzteils 3 zur Verfügung steht, d.h. insbesondere der Sternabsatz 12a untergebracht werden kann. Grundsätzlich sind aber beide Anordnungen gleichwertig.

Im zweiten Ausführungsbeispiel, in welchem gleiche und gleichwirkende Bauteile die gleichen Bezugszeichen tragen, ist der Beschlag 10 als Rastbeschlag ausgebildet, bei welchem das erste Beschlagteil 11 und das zweite Beschlagteil 12 miteinander verriegelbar sind, wie es beispielsweise in der DE 10 2006 015 560 B3 beschrieben ist, deren diesbezüglicher Offenbarungsgehalt ausdrücklich einbezogen wird.

Das zweite Beschlagteil 12 weist - vorliegend vier - Führungssegmente 114 auf, welche mit geraden Führungsflächen paarweise jeweils einen Riegel 116 seitlich in radialer Richtung führen. Die - vorliegend insgesamt vier - Riegel 116 sind - vorliegend um je 90° - versetzt zueinander in einem zwischen den beiden Beschlagteilen 11 und 12 definierten Bauraum angeordnet. Die Riegel 116 sind an ihrem radial außen liegenden Ende mit einer Verzahnung versehen, die mit einem Zahnkranz 17 des als Hohlrad ausgebildeten ersten Beschlagteils 11 in Eingriff gelangen (einfallen) kann. Wenn der Zahnkranz 17 und die Riegel 116 zusammenwirken, ist der Beschlag 10 verriegelt. Die Führungssegmente 114 liegen mit jeweils einer gebogenen Lagerfläche am Zahnkranz 17 des ersten Beschlagteils 11 an, wodurch die beiden Beschlagteile 11 und 12 einander lagern.

Im Zentrum des Beschlags 10 ist ein Mitnehmer 21 angeordnet, beispielsweise aus Kunststoff, welcher mittels einer zentralen Bohrung 23 drehfest - oder wenigstens auf Mitnahme gekoppelt - auf der Antriebswelle 7 sitzt und drehbar an wenigstens einem der beiden Beschlagteile 11 und 12, vorliegend dem ersten Beschlagteil 11, gelagert ist, genauer gesagt in einer zentralen Öffnung desselben. Auf dem Mitnehmer 21 sitzt drehfest oder wenigstens auf Mitnahme gekoppelt ein Exzenter 127, welcher in dem zwischen den Beschlagteilen 11 und 12 definierten Bauraum angeordnet ist. Eine Federanordnung 135, beispielsweise eine oder zwei ineinander geschachtelte Spiralfedern, ist in einer zentralen Aufnahme eines der beiden Beschlagteile 11 und 12, vorliegend des zweiten Beschlagteils 12, angeordnet und vorliegend außen abgestützt. Die Federanordnung 135 beaufschlagt den Exzenter 127, vorliegend indem sie innen drehfest auf dem Mitnehmer 21 sitzt. Eine derartige Federanordnung 135 ist beispielsweise in der DE 10 2005 046 807 B3 beschrieben, deren diesbezüglicher Offenbarungsgehalt ausdrücklich einbezogen wird. Der von der Federanordnung 135 beaufschlagte Exzenter 127 wirkt auf die radial beweglichen Riegel 116 ein und beaufschlagt diese, so dass sie radial nach außen gedrückt werden, um in den Zahnkranz 17 einzufallen, womit der Beschlag 10 verriegelt ist.

Eine Steuerscheibe 136 ist im Bauraum axial zwischen den Riegeln 116 und dem ersten Beschlagteil 11 angeordnet und sitzt vorliegend drehfest auf dem Exzenter 127. Die Steuerscheibe 136 weist - vorliegend vier - Steuerbahnen auf, die jeweils mit einer Nase 138 jedes Riegels 116 zusammenwirken. Die Nasen 138 stehen dabei in axialer Richtung von den ihnen zugeordneten Riegeln 116 ab. Der Mitnehmer 21 ist axial gesichert durch einen Sicherungsring 43, welcher bei der Montage des Beschlags 10 am Mitnehmer 21 befestigt wird, vorzugsweise aufgeclipst wird. Der Mitnehmer 21 und der Sicherungsring 43 weisen je einen Flansch auf, der jeweils auf der Außenseite eines der beiden Beschlagteile 11 oder 12 anliegt, und der als Dichtung wirkt. Bei einer Drehung (um wenige Grad) des Mitnehmers 21 - und des damit angetriebenen Exzenters 127 und der Steuerscheibe 136 - entgegen der Kraft der Federanordnung 135 zieht die Steuerscheibe 136 die Riegel 116 radial nach innen, d.h. aus dem Zahnkranz 17, womit der Beschlag 10 entriegelt ist und die beiden Beschlagteile 11 und 12 relativ zueinander um die Antriebswelle 7 verdrehbar sind. Die Neigung der Lehne 4 ist dadurch zwischen mehreren, zum Sitzgebrauch geeigneten Gebrauchsstellungen einstellbar.

Aufgrund der vorliegenden Montage des Beschlags 10 ist das erste Beschlagteil 11 mittels seines Zahnkranzes 17 auf den Führungssegmenten 114 des zweiten Beschlagteil 12 gelagert. Die Verhältnisse könnten aber genau umgekehrt sein, d.h. das zweite Beschlagteil 12 ist mittels seiner Führungssegment 114 im ersten Beschlagteil 11 auf dessen Zahnkranz 17 gelagert. Die im zweiten Ausführungsbeispiel beschriebene Anordnung hat den Vorteil, dass der Sternabsatz 12a mit seinen vier Armen genau zwischen die vier Führungssegmente 114 greifen kann, was die Führungslänge für die vier Riegel 116 optimiert. Zudem kann in der Mitte des Sternabsatzes 12a mittels eines weiteren Absatzes der für die Federanordnung 135 notwendige Bauraum geschaffen werden. Grundsätzlich sind aber beide Anordnungen gleichwertig.

### Bezugszeichenliste

- 1: Fahrzeugsitz
- 3: Sitzteil
- 3a: sitzteilfester Adapter
- 4: Lehne
- 4a: Lehnenseitenholm
- 5: Handrad
- 7: Antriebswelle
- 10: Beschlag
- 11: erstes Beschlagteil
- 11a: Ringabsatz
- 12: zweites Beschlagteil
- 12a: Sternabsatz
- 13: Umklammerungsring
- 13a: innerer Ringabschnitt
- 13b: äußerer Ringabschnitt
- 13c: Zentrierabschnitt
- 16: Zahnrad
- 17: Zahnkranz
- 19: Kragen
- 21: Mitnehmer
- 22: Nabe
- 23: Bohrung
- 25: Abdeckscheibe
- 27: Keilsegment
- 28: Gleitlagerbuchse
- 29: Mitnehmersegment
- 35: Omega-Feder
- 35a: Endfinger
- 43: Sicherungsring
- 44: Dichtring
- 45: Trennring
- 114: Führungssegment
- 116: Riegel
- 127: Exzenter
- 135: Federanordnung
- 136: Steuerscheibe
- 138: Nase
- I: I-Naht

## Patentansprüche

1. Beschlag für einen Fahrzeugsitz mit einem ersten Beschlagteil (11) und einem zweiten Beschlagteil (12), welche relativ zueinander verdrehbar sind und welche ein Umklammerungsring (13) axial zusammenhält, wobei wenigstens ein Beschlagteil (11, 12) auf seiner vom anderen Beschlagteil (12, 11) abgewandten Stirnseite einen Absatz (11a, 12a) als axial vorspringende Kontur aufweist zum formschlüssigen Zusammenwirken mit der Struktur eines Sitzteils (3) oder einer Lehne (4) des Fahrzeugsitzes (1), **dadurch gekennzeichnet, dass** als Absatz (11a, 12a) ein Sternabsatz (12a) vorgesehen ist, welcher eine vierarmige, kreuzförmige, im wesentlichen symmetrische Sternform aufweist.

2. Beschlag nach Anspruch 1, **dadurch gekennzeichnet, dass** bei der Sternform jeder Arm mit konvexem Bogen und/oder geradem Stück abschließt.

3. Beschlag nach einem der vorhergehenden Ansprüche, **dadurch gekennzeichnet, dass** bei der Sternform die Arme jeweils tangential mit konkavem Bogen und/oder geradem Stück ineinander übergehen.

4. Beschlag nach Anspruch 2 oder 3, **dadurch gekennzeichnet, dass** die Bögen Kreisbögen sind.

5. Beschlag nach einem der vorhergehenden Ansprüche, **dadurch gekennzeichnet, dass** der Sternabsatz (12a) formschlüssig durch eine genau passende Öffnung in der Struktur des Sitzteils (3) oder der Lehne (4) greift, so dass die Struktur des Sitzteils (3) oder der Lehne (4) in dem radial außerhalb des Sternabsatzes (12a) angeordneten Teil der Stirnseite des Beschlagteils (12) in Anlage an das Beschlagteil (12) kommt.

6. Beschlag nach einem der vorhergehenden Ansprüche, **dadurch gekennzeichnet, dass** eine Abweichung der Sternform des Sternabsatzes (12a) von der exakten Symmetrie vorgesehen ist, die insbesondere als Positionierhilfe und/oder Verdrehsicherung dient.

7. Beschlag nach einem der vorhergehenden Ansprüche, **dadurch gekennzeichnet, dass** an einem der Beschlagteile (11, 12) ein Zahnkranz (17) und am anderen der Beschlagteile (11, 12) ein Zahnrad (16) ausgebildet ist, welche miteinander kämmen, wodurch die beiden Beschlagteile (11, 12) miteinander in Getriebeverbindung stehen, und dass ein drehbar gelagerter, von einem Mitnehmer (21) angetriebener, umlaufender Exzenter (27) zum Antrieb einer relativen Abwälzbewegung von Zahnrad (16) und Zahnkranz (17) vorgesehen ist.

8. Beschlag nach Anspruch 7, **dadurch gekennzeichnet, dass** das Zahnrad (16) am radial äußeren Rand des zweiten Beschlagteils (12) ausgebildet ist.

9. Beschlag nach einem der Ansprüche 1 bis 6, **dadurch gekennzeichnet, dass** an einem der Beschlagteile (11, 12) ein Zahnkranz (17) und am anderen der Beschlagteile (11, 12) Führungssegmente (114) zur Lagerung des Zahnkranzes (17) und zur Führung von Riegeln (116) ausgebildet ist, und dass ein federbelasteter, drehbar gelagerter Exzenter (127) die radial beweglichen Riegel (116) beaufschlagt, welche mit dem Zahnkranz (17) zusammenwirken, um den Beschlag (10) zu verriegeln.

10. Beschlag nach Anspruch 9, **dadurch gekennzeichnet, dass** die Führungssegmente (114) am radial äußeren Rand des zweiten Beschlagteils (12) ausgebildet sind.

11. Beschlag nach Anspruch 9 oder 10 , **dadurch gekennzeichnet, dass** die Arme des Sternabsatzes (12a) zwischen die Führungssegmente (114) greifen.

12. Fahrzeugsitz, insbesondere Kraftfahrzeugsitz, mit einem Beschlag nach einem der vorhergehenden Ansprüche.

## Claims

1. Fitting for a vehicle seat, with a first fitting part (11) and a second fitting part (12), which are rotatable relative to each other and which are held together axially by a clamping ring (13), wherein at least one fitting part (11, 12) has, on the end side thereof facing away from the other fitting part (12, 11), a shoulder (11a, 12a) as an axially projecting contour for the interlocking interaction with the structure of a seat part (3) or of a backrest (4) of the vehicle seat (1), **characterized in that** the shoulder (11a, 12a) provided is a star-shaped shoulder (12a) which has a four-armed, cross-shaped, substantially symmetrical star shape.

2. Fitting according to Claim 1, **characterized in that**, in the star shape, each arm ends with a convex arc and/or rectilinear section.

3. Fitting according to either of the preceding claims, **characterized in that**, in the star shape, the arms each merge tangentially into one another with a concave arc and/or rectilinear section.

4. Fitting according to Claim 2 or 3, **characterized in that** the arcs are arcs of a circle.

5. Fitting according to one of the preceding claims, **characterized in that** the star-shaped shoulder (12a) engages in an interlocking manner through a precisely fitting opening in the structure of the seat part (3) or of the backrest (4) such that the structure of the seat part (3) or of the backrest (4) comes to bear against the fitting part (12) **in that** part of the end side of the fitting part (12) which is arranged radially outside the star-shaped shoulder (12a).

6. Fitting according to one of the preceding claims, **characterized in that** a deviation of the star shape of the star-shaped shoulder (12a) from the exact symmetry is provided, the said deviation serving in particular as a positioning aid and/or means of locking against rotation.

7. Fitting according to one of the preceding claims, **characterized in that** a toothed rim (17) is formed on one of the fitting parts (11, 12) and a toothed wheel (16) is formed on the other of the fitting parts (11, 12), said toothed rim and toothed wheel meshing with each other, as a result of which the two fitting parts (11, 12) are in geared connection to each other, and **in that** a rotatably mounted, revolving eccentric (27) which is driven by a driver (21) is provided for driving a relative rolling movement of toothed wheel (16) and toothed rim (17).

8. Fitting according to Claim 7, **characterized in that** the toothed wheel (16) is formed on the radially outer edge of the second fitting part (12).

9. Fitting according to one of Claims 1 to 6, **characterized in that** a toothed rim (17) is formed on one of the fitting parts (11, 12) and guide segments (114) for the mounting of the toothed rim (17) and for the guiding of catches (116) is formed on the other of the fitting parts (11, 12), and **in that** a spring-loaded, rotatably mounted eccentric (127) acts upon the radially movable catches (116) which interact with the toothed rim (17) in order to lock the fitting (10).

10. Fitting according to Claim 9, **characterized in that** the guide segments (114) are formed on the radially outer edge of the second fitting part (12).

11. Fitting according to Claim 9 or 10, **characterized in that** the arms of the star-shaped shoulder (12a) reach between the guide segments (114).

12. Vehicle seat, in particular motor vehicle seat, with a fitting according to one of the preceding claims.

## Revendications

1. Ferrure pour un siège de véhicule comprenant une première partie de ferrure (11) et une deuxième partie de ferrure (12), lesquelles peuvent tourner l'une par rapport à l'autre et lesquelles retiennent axialement ensemble une bague de serrage (13), au moins une partie de ferrure (11, 12) sur son côté frontal opposé à l'autre partie de ferrure (12, 11) présentant un épaulement (11a, 12a) en tant que contour saillant axialement pour la coopération par engagement par correspondance de forme avec la structure d'une partie de siège (3) ou d'un dossier (4) du siège de véhicule (1), **caractérisée en ce que** l'on prévoit comme épaulement (11a, 12a) un épaulement stellaire (12a) qui présente une forme stellaire essentiellement symétrique, à quatre bras, en forme de croix.

2. Ferrure selon la revendication 1, **caractérisée en ce que** dans la forme stellaire, chaque bras se termine avec un arc convexe et/ou une pièce droite.

3. Ferrure selon l'une quelconque des revendications précédentes, **caractérisée en ce que** dans la forme stellaire, les bras se prolongent à chaque fois tangentiellement l'un dans l'autre avec un arc concave et/ou avec une pièce droite.

4. Ferrure selon la revendication 2 ou 3, **caractérisée en ce que** les arcs sont des arcs de cercle.

5. Ferrure selon l'une quelconque des revendications précédentes, **caractérisée en ce que** l'épaulement stellaire (12a) vient en prise par engagement par correspondance de forme à travers une ouverture à ajustement serré dans la structure de la partie de siège (3) ou du dossier (4), de telle sorte que la structure de la partie de siège (3) ou du dossier (4) vienne en appui contre la partie de ferrure (12) dans la partie du côté frontal de la partie de ferrure (12) disposée radialement à l'extérieur de l'épaulement stellaire (12a).

6. Ferrure selon l'une quelconque des revendications précédentes, **caractérisée en ce qu'**un écart de la forme stellaire de l'épaulement stellaire (12a) par rapport à une symétrie exacte est prévu, lequel sert notamment d'aide au positionnement et/ou de protection antirotation.

7. Ferrure selon l'une quelconque des revendications précédentes, **caractérisée en ce qu'**une couronne dentée (17) est réalisée sur l'une des parties de ferrure (11, 12) et une roue dentée (16) est réalisée sur l'autre des parties de ferrure (11, 12), lesquelles s'engrènent l'une dans l'autre, de sorte que les deux parties de ferrure (11, 12) soient en liaison d'engrenage l'une avec l'autre et **en ce qu'**un excentrique périphérique (27) monté à rotation, entraîné par un dispositif d'entraînement (21) est prévu pour entraîner un mouvement de roulement relatif entre la roue dentée (16) et la couronne dentée (17).

8. Ferrure selon la revendication 7, **caractérisée en ce que** la roue dentée (16) est réalisée sur le bord radialement extérieur de la deuxième partie de ferrure (12).

9. Ferrure selon l'une quelconque des revendications 1 à 6, **caractérisée en ce qu'**une couronne dentée (17) est réalisée sur l'une des parties de ferrure (11, 12) et des segments de guidage (114) pour supporter la couronne dentée (17) et pour guider des verrous (116) sont réalisés sur l'autre des parties de ferrure (11, 12), et **en ce qu'**un excentrique sollicité par ressort (127), monté à rotation, sollicite les verrous déplaçables radialement (116) qui coopèrent avec la couronne dentée (17) afin de verrouiller la ferrure (10).

10. Ferrure selon la revendication 9, **caractérisée en ce que** les segments de guidage (114) sont réalisés sur le bord radialement extérieur de la deuxième partie de ferrure (12).

11. Ferrure selon la revendication 9 ou 10, **caractérisée en ce que** les bras de l'épaulement stellaire (12a) viennent en prise entre les segments de guidage (114).

12. Siège de véhicule, en particulier siège de véhicule automobile, comprenant une ferrure selon l'une quelconque des revendications précédentes.
